# EUROPÄISCHE PATENTSCHRIFT

(11) **EP 1 841 613 B1**
(45) Veröffentlichungstag und Bekanntmachung des Hinweises auf die Patenterteilung: **27.07.2011**
(21) Anmeldenummer: 06706188.7
(22) Anmeldetag: 10.01.2006
(51) Int. Cl.: B60K 11/04, B62D 21/15, B62D 25/08

(54) **Wärmetauschereinheit mit Befestigungseinrichtung und Fahrzeug mit einer Wärmetauschereinheit**
Heat exchanger unit with fastening device and vehicle with a heat exchanger unit
Unité d'échangeur de chaleur avec dispositif de fixation et véhicule équipé d'une unité d'échangeur de chaleur

(30) Priorität: 14.01.2005 DE 102005002068
(43) Veröffentlichungstag der Anmeldung: 10.10.2007
(73) Patentinhaber: Behr GmbH & Co. KG, 70469 Stuttgart (DE)
(72) Erfinder: HEINE, Reinhard, 71397 Leutenbach (DE)
(74) Vertreter: Grauel, Andreas
(86) Internationale Anmeldenummer: PCT/EP2006/000147
(87) Internationale Veröffentlichungsnummer: WO 2006/074900

(56) Entgegenhaltungen:
- EP-A- 1 323 566
- DE-A1- 10 142 796
- DE-A1- 10 260 171
- DE-B3- 10 260 787
- DE-C1- 4 232 019

## Beschreibung

Fahrzeuge, insbesondere Kraftfahrzeuge weisen üblicherweise eine Wärmetauschereinheit auf, die im Frontbereich des Fahrzeugs, insbesondere hinter einem Kühlergrill noch vor dem Antriebsaggregat des Fahrzeugs angeordnet ist. Die Wärmetauschereinheit ist dabei insbesondere mittelbar am Fahrzeugrahmen gehalten. Der Fahrzeugrahmen wird dabei üblicherweise durch einen Längsträger auf jeder Fahrzeugseite und einen diese beiden Längsträger verbindenden Biegeträger gebildet.

In Fahrtrichtung des Fahrzeugs gesehen liegt vor einer solchen Wärmetauschereinheit, die beispielsweise dem Kühlen von Betriebsmitteln wie Kühlwasser, Kältemittel und Motor-/Getriebeöl durch durchströmende Umgebungsluft dient, der Biegeträger. Der Biegeträger dient bei Kollisionen der Lasteinleitung in die Längsträger des Fahrzeugs und dem Verteilen der auftretenden Last auf beide Fahrzeugseiten, wobei zwischen Biegeträger und Längsträger Deformationselemente angeordnet sind. Eine solche Wärmetauschereinheit mit Befestigungseinrichtung an einem Fahrzeug ist in der EP 1 323 566 offenbart.

Die Wärmetauschereinheit weist dabei auf beiden Fahrzeugseiten obere und untere Befestigungspunkte auf um im Fahrzeug sicher gehalten zu sein. Die unteren Befestigungspunkte liegen typischerweise in Höhe der Längsträger, die oberen Befestigungspunke im Bereich des so genannten Schlossquerträgers, welcher selbst am Biegeträger und an den Fahrzeuglängsträgern abgestützt ist und oberhalb des Biegeträgers in Fahrzeugquerrichtung verläuft.

Es entspricht dabei einer üblichen Konstruktion, wenn zwischen Längsträger und Biegeträger die Längsträger verlängernde Deformationselemente vorgesehen sind, die sich bei Kollisionen in vorgegebener Weise plastisch verformen und dabei Energie abbauen. Neben dem Abbau von Energie wird bis zu einem gewissen Maß an eingeleiteter Energie ein Verformen der Längsträger bei einer Kollision vermieden, so dass die entstehenden Schäden leichter und kostengünstiger reparierbar sind.

Bei einer die Deformationselemente verformenden Kollision soll die Wärmetauschereinheit zum Aufrechterhalten der Fahrbarkeit des Fahrzeugs und zum Minimieren der Reparaturkosten möglichst unversehrt bleiben.

Aufgabe der Erfindung ist es eine Befestigungsmöglichkeit für eine Wärmetauschereinheit zu schaffen, die diese Unversehrtheit der Wärmetauschereinheit auch dann noch möglichst weitgehend gewährt, wenn der freie Raum zwischen Biegeträger und zwischen den Längsträgern angeordnetem Motor gering ist.

Diese Aufgabe wird mittels einer erfindungsgemäßen Wärmetauschereinheit mit Befestigungseineichtung und durch ein erfindungsgemäß ausgebildetes Fahrzeug gelöst.

Eine Wärmetauschereinheit mit Befestigungseinrichtung an einem Fahrzeug weist auf jeder Fahrzeugseite einen oberen und einen unteren Befestigungspunkt auf. Über die Befestigungspunkte ist die Wärmetauschereinheit beiderseits wenigstens mittelbar an dem Fahrzeugrahmen befestigt. Dabei ist gemäß der Erfindung ein Haltebügel vorgesehen ist, welcher den oberen und unteren Befestigungspunkt miteinander verbindet, wobei der Haltebügel wenigstens mittelbar am Fahrzeuglängsträger befestigbar ist.

Durch den Haltebügel wird eine Befestigungseinrichtung geschaffen, die gleich einem in Vertikalrichtung verlaufenden Rahmenteil die Befestigung der Wärmetauschereinheit nur an einer Stelle auf jeder Fahrzeugseite ermöglicht. Hierdurch ist die Halterung der Wärmetauschereinheit unabhängig von der unterschiedlichen Befestigung am oberen und unteren Frontbereich (Schlossquerträger bzw. Biegeträger) und kann auch mit einer Verschiebung der Befestigungsstelle am Längsträger bzw. den Deformationselementen mitbewegt werden. Die Wärmetauschereinheit bleibt daher über einen größeren Bereich hinweg unbeschädigt.

Ein Haltebügel ist somit auf jeder Fahrzeugseite vorzusehen, er wird jeweils am in Fahrzeugquerrichtung gelegenen Randbereich der Wärmetauschereinheit vorgesehen sein. Um eine sichere Halterung der Wärmetauschereinheit in Hochrichtung zu gewährleisten ist dabei vorzugsweise vorzusehen, dass sich der Haltebügel vertikal über einen großen Bereich des Wärmetauschers erstreckt. Die wenigstens mittelbare Befestigung des Haltebügels am Fahrzeuglängsträger ist dabei so auszubilden dass ein Kippen des Haltebügels verhindert ist. Dies kann insbesondere durch zwei vertikal zueinander beabstandete Befestigungspunke geschehen.

Es entspricht dabei vorteilhafter Ausgestaltung der Befestigungseinrichtung wenn im oberen und unteren Befestigungspunkt zwischen Haltebügel und Wärmetauschereinheit Schwingungsdämpfer vorgesehen sind. Hierdurch ist jeweils eine schockabsorbierende Halterung geschaffen, die geeignet ist Lastspitzen abzufangen. Die Verbindung zwischen Haltebügel und Deformationselement ist dagegen vorzugsweise starr ausgebildet.

Gemäß vorteilhafter Ausgestaltung der Befestigungseinrichtung ist vorgesehen, dass der Haltebügel aus der Verbindungsebene der Befestigungspunkte in Fahrzeuglängsrichtung herausragt. Hierdurch wird zum einen ein Sicheres Halten der Wärmetauschereinheit geschaffen zum anderen kann die Positionierung der Wärmetauschereinheit über diesen Abstand - durch entsprechende Gestaltung des Haltebügels - von der Befestigungsstelle am Längsträger in Fahrzeuglängsrichtung versetzt sein. Hierdurch wird die Möglichkeit einer kollisions- und funktionsgünstigeren Lage der Wärmetauschereinheit in Fahrzeuglängsrichtung, beispielsweise mit größerem Abstand zwischen Wärmetauschereinheit und dahinter liegendem Antriebsaggregat geschaffen. Hierzu ist der Haltebügel vorzugsweise im Wesentlichen D-förmig ausgebildet. Dabei bildet der Haltebügel den gebogenen Abschnitt des gedachten D, während die Wärmetauschereinheit den linearen Rücken bildet.

Ein Fahrzeug weist einen Fahrzeugrahmen mit zueinander beabstandeten Längsträgern und einem Biegeträger, der die Längsträger in Querrichtung miteinander verbindet und vor den Längsträgern verläuft auf. Zwischen Längsträger und Biegeträger sind Deformationselemente angeordnet. Am Fahrzeugrahmen ist eine Wärmetauschereinheit abgestützt. Gemäß der Erfindung ist vorgesehen, dass die Wärmetauschereinheit nur an den Deformationselementen und über diese mittelbar am Längsträger befestigt ist.

Durch diese Maßnahme wird insbesondere bei einer versetzten frontalen Kollision, auf der auf beiden Seiten des Fahrzeugs eine unterschiedlich hohe Kraft auf die Längsträger eingeleitet wird, ein Verschieben der Lage der Wärmetauschereinheit mit der Verformung des Frontbereichs des Fahrzeugs ermöglicht. Hierdurch bleibt die Wärmetauschereinheit über größere Belastungsbereiche hinweg ohne Kontakt mit dem dahinter liegenden Antriebsaggregat. Hierdurch wird eine Beschädigung der Wärmetauschereinheit vermieden, Reparaturkosten werden verringert, eine Fahrbarkeit des Fahrzeugs bleibt eventuell noch aufrecht erhalten. Wichtig ist hierzu dass die Befestigung nur über die Deformationselemente erfolgt und nicht am oberen Fahrzeugbereich weitere Befestigungsstellen vorgesehen sind, so dass in Vertikalrichtung dem Verschieben der Wärmetauschereinheit im Kollisionsfall entgegengewirkt wird. Gleichzeitig ist dadurch sicher gestellt, dass Biegeträger und Wärmetauschereinheit bei einer Kollision im Verformungsbereich des Deformationselementes nicht in Berührung miteinander gelangen. Eine Beschädigung der Wärmetauschereinheit durch den Biegeträger ist dadurch in diesem Bereich vermieden. Letztendlich erlaubt es diese Art der Konstruktion die Wärmetauschereinheit weiter vorne, näher am Biegeträger anzuordnen und dadurch hinter dem Wärmetauscher einen größeren Freiraum zu gewinnen.

Es entspricht dabei vorteilhafter Ausgestaltung, wenn die Befestigungsstelle der Wärmetauschereinheit am Deformationselement derart gewählt ist, dass bei maximaler Deformation des Deformationselements die Wärmetauschereinheit beschädigungsfrei bleibt. Dadurch ist sicher gestellt, dass bei einer Kollision, deren Energie so gering ist, dass nur ein Verformen des Deformationselementes stattfindet, die Wärmetauschereinheit nur mit dem Deformationselement und dem sich verschiebenden Befestigungspunkt mitbewegt wird ohne dass ein Beschädigen der Wärmetauschereinheit, beispielsweise durch Berührung mit dem dahinter liegenden Antriebsaggregat oder seinen Nebenaggregaten erfolgt.

Dies wird in besonders vorteilhafter Weise dadurch erreicht, dass zwischen Wärmetauschereinheit und dahinter liegenden Aggregaten ein Freiraum ausgebildet ist, wobei die Wärmetauschereinheit bei maximaler Deformation des Deformationselements um nicht mehr als den Freiraum nach hinten verschoben wird. Die Lage des Befestigungspunktes von der Wärmetauschereinheit am Deformationselement ist also so gewählt dass bei maximaler Verformung des Deformationselements ein Kontakt zwischen Wärmetauschereinheit und dahinter liegenden Aggregaten gerade noch vermieden wird. Gleichzeitig ist auch dann ein Kontakt zwischen Biegeträger und Wärmetauschereinheit vermieden. Die Wärmetauschereinheit bleibt intakt.

Es entspricht vorteilhafter Ausgestaltung der wenn wenigstens eines der Elemente aus Biegeträger und Deformationselemente jeweils wenigstens einen Flansch zum Befestigen aneinander aufweist, wobei die Wärmetauschereinheit an diesen Flanschen befestigt ist. Diese Flansche sind ohnehin vorzusehen und bieten die Möglichkeit in einfacher Weise Befestigungspunkte für die Wärmetauschereinheit vorzusehen. Die Befestigung kann dabei erfindungsgemäß an biegeträgerseitigen Flanschen erfolgen.

Gemäß vorteilhafter Ausgestaltung ist vorgesehen, dass die Wärmetauschereinheit am den Deformationselementen befestigt ist, wobei am Deformationsbereich jeweils eine Befestigungsstelle für die Wärmetauschereinheit ausgebildet ist. Dies stellt eine Alternative zur Befestigung an den Verbindungsflanschen zwischen Deformationselement und Biegeträger dar.

Gemäß weiteren vorteilhaften Ausgestaltungen sind zur Befestigung der Wärmetauschereinheit beidseitig erfindungsgemäße Haltebügels vorgesehen. Hierdurch wird in besonders günstiger weise die in Hochrichtung definierte Befestigung der Wärmetauschereinheit ermöglicht.

Im Übrigen ist die Erfindung nachfolgend an Hand der in der Zeichnung dargestellten Ausführungsform näher erläutert; dabei zeigt:
- Fig. 1: eine schematische Querschnittszeichnung eines Fahrzeugfront- bereichs;
- Fig. 2a,2b: die Aufsicht auf die Befestigung der Wärmetauschereinheit ge- mäß Fig. 1 an einer Fahrzeugseite vor bzw. nach einer Kollision; und
- Fig. 3: die Querschnittsdarstellung der Fig. 1 in zwei getrennten Teil- zeichnungen.

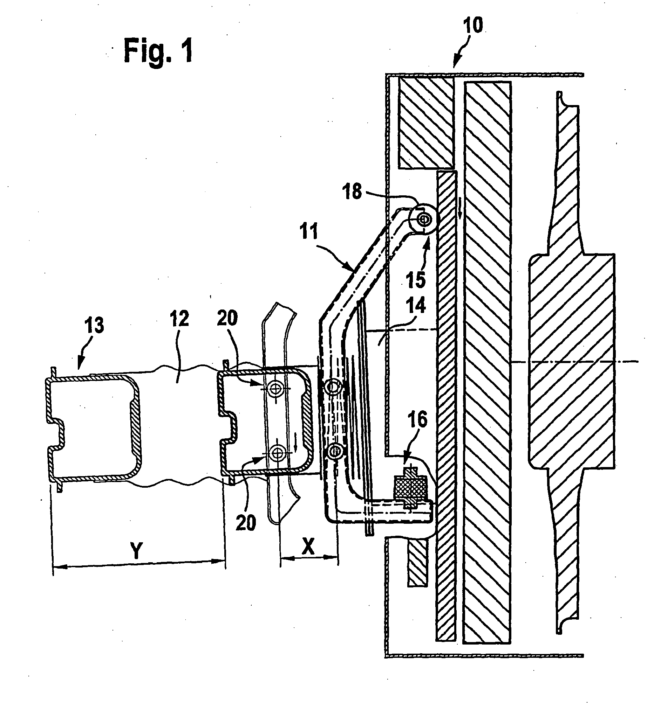

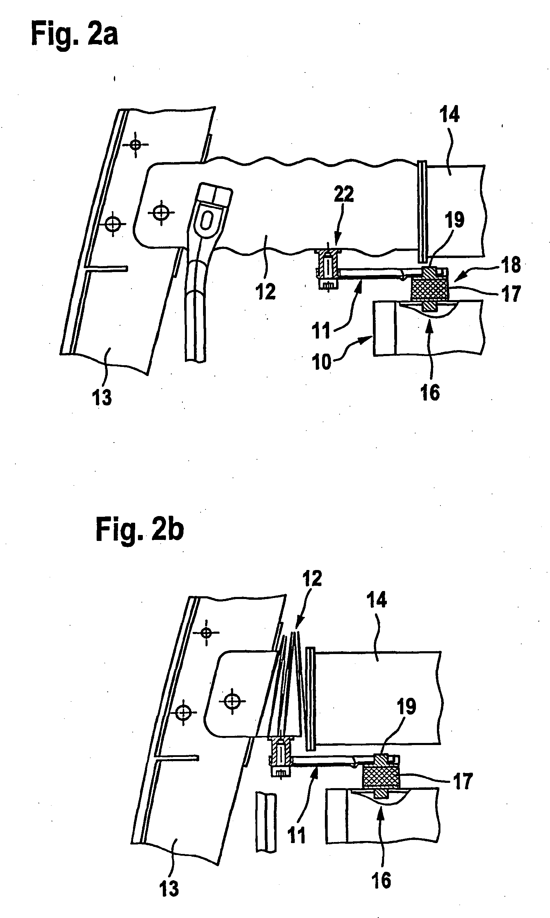

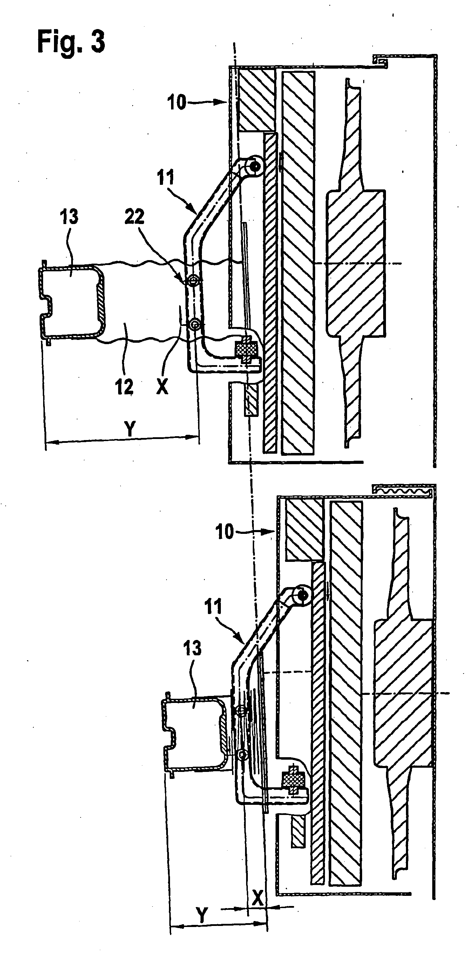

Die Figur 1 zeigt in schematischer teilgeschnittener Seitenansicht die Wärmetauschereinheit 10, die über den Haltebügel 11 an dem Deformationselement 12 befestigt ist. Das Deformationselement 12 erstreckt sich bis zu dem Biegeträger 13. Dabei ragt das Deformationselement 12 axial nach vorne, in Fahrzeuglängsrichtung vom Fahrzeuglängsträger 14 ab. Die entsprechende Aufsicht ist in der Fig. 2a bzw. 2b gezeigt. Die Fig. 3 zeigt in zwei getrennten Teilfiguren die Ansicht der Figur 1, wobei in der oberen Figurenhälfte die Situation vor einer Kollision und in der unteren Figurenhälfte die Situation nach einer Kollision gezeigt ist.

Dabei erstreckt sich der Haltebügel 11 in Vertikalrichtung und verbindet die oberen Befestigungspunkte 15 und die unteren Befestigungspunkte 16 der Wärmetauschereinheit miteinander. In jedem dieser Befestigungspunkte ist ein Gummipuffer 17 zwischen einer haltearmseitigen Befestigungshülse 18 und einem wärmetauscherseitigen Befestigungsdom 19 vorgesehen. Der Haltebügel 11 erstreckt sich bogenförmig zwischen dem oberen und unteren Befestigungspunkt 15, 16. Die Befestigungsdorne 19 der Wärmetauscher einheit der oberen bzw. unteren Befestigungspunkte 15 bzw. 16 sind dabei rechtwinklig zueinander ausgerichtet, der eine in Hochrichtung und der andere in Querrichtung des Fahrzeugs. Hierdurch wird zum einen die Lage des Wärmetauschers justierbar und ein Toleranzausgleich ist möglich, zum anderen ist in beide Richtungen eine stabile Halterung gegeben. Die Wärmetauschereinheit 10 ist im Wesentlichen selbsttragend ausgebildet, kann aber einen seitlichen Hilfsrahmen aufweisen, welcher der Befestigung unterschiedlicher Teilelemente der Wärmetauschereinheit miteinander dient. Ein solcher Hilfsrahmen erstreckt sich dann vorzugsweise über beide Befestigungspunkte 15 und 16 einer Fahrzeugseite, er kann darüber hinaus die Wärmetauschereinheit 10 auf allen Seiten (Querrichtung und Hochrichtung) umfassen.

Im von der Wärmetauschereinheit am weitesten in Fahrzeuglängsrichtung entfernten Bereich ist der Haltebügel 11 am Deformationselement 12 in zwei vertikal übereinander vorgesehenen, benachbarten Verbindungsstellen 20 befestigt. Dabei ist im Bereich des Deformationselements 12 ein Befestigungsbereich 22 ausgebildet, der in der Aufsicht in Fig. 2a, 2b besser zu erkennen ist. In den Verbindungsstellen 20 können dabei ebenfalls jeweils Gummipuffer 17 vorgesehen sein.

Durch den Haltebügel 11 mit den Verbindungsstellen 20 und die Wärmetauschereinheit 10 mit ihren Befestigungspunkten 15, 16 ist eine Befestigungseinrichtung für die Wärmetauschereinheit 10 geschaffen. Mittels dieser Befestigungseinrichtung ist der Wärmetauscher allein an den Deformationselementen 12 gehalten. Es ist ein Fahrzeug mit entsprechender Befestigung der Wärmetauschereinheit 10 allein am Deformationselement 12 des Fahrzeuglängsträgers 14 ausgebildet.

An Stelle der Befestigung an einem Befestigungsbereich 22 des Deformationselements 12 kann die Befestigung an dem Verbindungsflansch zwischen Deformationselement 12 und Biegeträger 13 treten. Der Verbindungsflansch kann dabei sowohl biegeträgerseitig als auch deformationselementseitig ausgebildet sein.

Die Figur 1 und die Figuren 2a, 2b die Position des Biegeträgers 13 und der Wärmetauschereinheit 10 vor (Fig. 2a) und nach (Fig. 2b) einer Kollision bei der das Deformationselement durch zieharmonikaartiges Auffalten plastisch verformt wurde. Mit X bzw. Y sind die Verschiebewege von Biegeträger 13 bzw. Wärmetauschereinheit 10 gekennzeichnet, die ohne Beschädigung von Fahrzeuglängsträger 14 und Wärmetauschereinheit 10 erreichbar sind. Durch die plastische Verformung des Deformationselements 12 wird hierbei Kollisionsenergie aufgenommen und vernichtet. In der Fig. 1 ist die Situation vor der Kollision dünner dargestellt als nach der Kollision, von der Ausgangsstellung vor der Kollision wurde lediglich der Haltebügel 11 gezeigt, die Wärmetauschereinheit 10 ist nur in der Endlage nach der Verformung des Deformationselements 12 dargestellt. Die Fig. 2a zeigt die Aufsicht vor einer Kollision, die Fig. 2b die Aufsicht nach der Kollision. Durch die so ausgeführte Anbringung wird ein weitgehender Schutz des Wärmetauschers vor Beschädigung bei Kollisionen erreicht. Durch die Möglichkeit des Verschiebens des Wär metauschers mit dem Auffalten des Deformationselements 12 wird darüber hinaus erreicht, dass mehr Platz zwischen Wärmetauscher und Motor vorhanden ist und damit ein besseres Durchströmen des Wärmetauschers ermöglicht ist.

Die Fig. 3 zeigt in zwei getrennten Teilfiguren die Ansicht der Figur 1, wobei in der oberen Figurenhälfte die Situation vor einer Kollision und in der unteren Figurenhälfte die Situation nach einer Kollision gezeigt ist. Dabei ist aus dem Vergleich der Figurenhälften besonders gut ersichtlich, dass sich die Lage der Wärmetauschereinheit 10 bei dem Verformen der Deformationselemente 12 um die Verschiebestrecke X nach hinten verlagert. Die Lage des Biegeträgers 13 ändert sich dabei um die Verschiebestrecke Y, die entsprechend größer ist. Das Verhältnis der Verschiebestrecken X und Y zueinander ist dabei von der Lage des Befestigungsbereichs 22 am Deformationselement 12 abhängig und entsprechend den Platzverhältnissen im Fahrzeug bestimmt. Im Übrigen entspricht die Darstellung der Fig. 3 der der Fig. 1, so dass auf die diesbezügliche Beschreibung verwiesen wird.

## Patentansprüche

1. Wärmetauschereinheit mit Befestigungseinrichtung zur Befestigung an einem Fahrzeug, wobei die Wärmetauschereinheit (10) einen ersten oberen und einen zweiten unteren Befestigungspunkt (15 bzw. 16) aufweist und über die Befestigungspunkte (15,16) wenigstens mittelbar an einem Fahrzeugrahmen mit Deformationselementen befestigbar ist, wobei ein Haltebügel (11) vorgesehen ist, welcher den ersten und zweiten Befestigungspunkt (15, 16) miteinander verbindet, wobei der Haltebügel (11) wenigstens mittelbar an einem Fahrzeuglängsträger (14) befestigbar ist und in dem zumindest einen ersten und zweiten Befestigungspunkt (15,16) zwischen dem Haltebügel (11) und Wärmetauschereinheit (10) zumindest ein Schwingungsdämpfer (17) vorgesehen ist und der Haltebügel (11) aus der Verbindungsebene der Befestigungspunkte (15,16) in Fahrzeuglängsrichtung bogenförmig herausragt und vertikal an zwei übereinander liegenden, benachbarten Befestigungsstellen (20) befestigbar ist, wobei die Wärmetauschereinheit (10) nur an den Deformationselementen (13) befestigbar ist.

2. Wärmetauschereinheit nach Anspruch 1, **dadurch gekennzeichnet, dass** der Haltebügel (11) im Wesentlichen D-förmig ausgebildet ist.

3. Fahrzeug mit einem Fahrzeugrahmen mit zueinander beabstandeten Fahrzeuglänsträgem (14) und einem Biegeträger (13), der die Fahrzeuglänglängsträger (14) in Querrichtung miteinander verbindet und vor den Fahrzeuglängsträgem (14) verläuft, zwischen Fahrzeuglängsträger (14) und Biegeträger (12) angeordneten Deformationselementen (13), ei-ner am Fahrzeugrahmen befestigten Wärmetauschereinheit (10), **dadurch gekennzeichnet, dass** die Wärmetauschereinheit nach einem der Ansprüche 1 bis 2 nur an den Deformationselementen (13) befestigt ist.

4. Fahrzeug nach Anspruch 3, **dadurch gekennzeichnet, dass** die Befestigungsstelle der Wärmetauschereinheit (10) am Deformationselement (13) derart gewählt ist, dass bei maximaler Deformation des Deformationselements (13) die Wärmetauschereinheit (10) beschädigungsfrei bleibt.

5. Fahrzeug nach Anspruch 4, **dadurch gekennzeichnet, dass** zwischen Wärmetauschereinheit (10) und dahinter liegendem Aggregat ein Freiraum ausgebildet ist, wobei die Wärmetauschereinheit (10) bei maximaler Deformation des Deformationselements um nicht mehr als den Freiraum nach hinten verschoben wird.

6. Fahrzeug nach einem der Ansprüche 3 bis 5, **dadurch gekennzeichnet, dass** wenigstens eines der Elemente aus Biegeträger (12) und Deformationselementen (13) jeweils wenigstens einen Flansch zum Befestigen aneinander aufweist, wobei die Wärmetauschereinheit (10) an einem dieser Flansche befestigt ist.

7. Fahrzeug nach Anspruch 6, **dadurch gekennzeichnet, dass** die Wärmetauschereinheit (10) am Befestigungsftansch des Biegeträges (12) gehalten ist.

8. Fahrzeug nach einem der Anspruch 3 bis 7, **dadurch gekennzeichnet, dass** die Wärmetauschereinheit (10) an den Deformationselementen (12) befestigt ist, wobei eine Befestigungsstelle für die Wärmetauschereinheit (10) an den Deformationselementen (12) ausgebildet ist.

9. Fahrzeug nach einem der Ansprüche 3 bis 7, **dadurch gekennzeichnet, dass** die Wärmetauschereinheit mittels des Haltebügels (11) befestigt ist.

## Claims

1. A heat exchanger unit comprising a fastening device for fastening to a vehicle, wherein the heat exchanger unit (10) comprises a first upper and a second lower fastening point (15 and 16) and can be fastened at least indirectly to a vehicle frame with deformation elements via the fastening points (15, 16), wherein a holding bracket (11) is provided, Which connects the first and second fastening points (15,16) to one another, wherein the holding bracket (11) can be fastened at least indirectly to a longitudinal vehicle member (14) and at least one vibration damper (17) is provided at the at least one first and second fastening points (15, 16) between the holding bracken (11) and the heat exchanger unit (10), and the holding bracket (11) projects out of the connecting plane of the fastening points (15, 16) in the longitudinal vehicle direction in an arched manner and can be fastened vertically at two adjacent fastening locations (20) located one above the other, wherein the heat exchanger unit (10) can only be fastened to the deformation elements (13).

2. The heat exchanger unit as claimed in claim 1, **characterized in that** the holding bracket (11) has a substantially D-shaped design.

3. A vehicle comprising a vehicle frame having longitudinal vehicle members (14) spaced apart from one another and a bending member (13), which connects the longitudinal vehicle members (14) to one another in the transverse direction and runs in front of the longitudinal vehicle members (14), deformation elements (13) arranged between the longitudinal vehicle member (14) and bending member (12), and a heat exchanger unit (10) fastened to the vehicle frame, **characterized in that** the heat exchanger unit according to either claim 1 or 2 is fastened only to the deformation elements (13).

4. The vehicle as claimed in claim 3, **characterized in that** the fastening location of the heat exchanger unit (10) on the deformation element (13) is selected such that the heat exchanger unit (10) remains free of damage in the event of a maximum deformation of the deformation element (13).

5. The vehicle as claimed in claim 4, **characterized in that** a free space is formed between the heat exchanger unit (10) and the assembly located behind it, the heat exchanger unit (10) being displaced rearward by no more than the free space in the event of a maximum deformation of the deformation element.

6. A vehicle as claimed in one of claims 3 to 5, **characterized in that** at once of the elements comprising the bending member (12) and the deformation elements (13) has in each case at least one flange for fastening to one another, the heat exchanger unit (10) being fastened to one of these flanges.

7. The vehicle as claimed in claim 6, **characterized in that** the heat exchanger unit (10) is held on the fastening flange of the bending member (12),

8. A vehicle as claimed in one of claims 3 to 7, **characterized in that** the heat exchanger unit (10) is fastened to the deformation elements (12), a fastening location for the heat exchanger unit (10) being formed on the deformation elements (12).

9. A vehicle as claimed in one of claims 3 to 7, **characterized in that** the heat exchanger unit is fastened by means of the holding bracket (11)

## Revendications

1. Unité d'échangeur de chaleur comprenant un dispositif de fixation servant à la fixation sur un véhicule, où l'unité d'échangeur de chaleur (10) présente un premier point de fixation supérieur et un deuxième point de fixation inférieur (15 ou 16) et, avec des éléments de déformation, peut être fixée sur un châssis de véhicule, au moins indirectement par les points de fixation (15, 16), où il est prévu un étrier de retenue (11) qui relie l'un à l'autre le premier et le deuxième point de fixation (15, 16), où l'étrier de retenue (11) peut être fixé sur un longeron de véhicule (14) au moins indirectement, et au moins un amortisseur de vibrations (17) est prévu entre l'étrier de retenue (11) et l'unité d'échangeur de chaleur (10), dans le premier et le deuxième point de fixation (15, 16) au moins au nombre de un, et l'étrier de retenue (11) dépasse, de façon arquée, du plan de jonction des points de fixation (15, 16), dans le sens long du véhicule, et peut être fixé, verticalement, au niveau de deux emplacements de fixation voisins (20) placés l'un au-dessus de l'autre, où l'unité d'échangeur de chaleur (10) peut être fixée seulement sur les éléments de déformation (12).

2. Unité d'échangeur de chaleur selon la revendication 1, **caractérisée en ce que** l'étrier de retenue (11) est configuré sensiblement en forme de D.

3. Véhicule comprenant un châssis de véhicule comportant des longerons de véhicule (14) espacés l'un de l'autre, et un support déformable (13) qui relie l'un à l'autre, dans le sens transversal, les longerons (14) du véhicule et qui s'étend devant les longerons (14) du véhicule, entre des éléments de déformation (12) disposés entre les longerons (14) du véhicule et le support déformable (13) d'une unité d'échangeur de chaleur (10) fixée sur le châssis du véhicule, **caractérisé en ce que** l'unité d'échangeur de chaleur selon l'une des revendications 1 et 2 est fixée seulement sur les éléments de déformation (12).

4. Véhicule selon la revendication 3, **caractérisé en ce que** l'emplacement de fixation de l'unité d'échangeur de chaleur (10), sur l'élément de déformation (12), est choisi de manière telle, qu'en cas de déformation maximale de l'élément de déformation (12), l'unité d'échangeur de chaleur (10) reste non endommagée.

5. Véhicule selon la revendication 4, **caractérisé en ce qu'**un espace libre est configuré entre l'unité d'échangeur de chaleur (10) et l'ensemble placé derrière, où l'unité d'échangeur de chaleur (10), en cas de déformation maximale de l'élément de déformation, n'est pas déplacée vers l'arrière sur une distance supérieure à celle de l'espace libre.

6. Véhicule selon l'une quelconque des revendications 3 à 5, **caractérisé en ce qu'**au moins l'un des éléments se composant du support déformable (13) et d'éléments de déformation (12) présente, à chaque fois, au moins une bride servant à les fixer l'un à l'autre, où l'unité d'échangeur de chaleur (10) est fixée sur l'une de ces brides.

7. Véhicule selon la revendication 6, **caractérisé en ce que** l'unité d'échangeur de chaleur (10) est retenue sur la bride de fixation du support déformable (13).

8. Véhicule selon l'une quelconque des revendications 3 à 7, **caractérisé en ce que** l'unité d'échangeur de chaleur (10) est fixée sur les éléments de déformation (12), où un emplacement de fixation prévu pour l'unité d'échangeur de chaleur (10) est configuré sur les éléments de déformation (12).

9. Véhicule selon l'une quelconque des revendications 3 à 7, **caractérisé en ce que** l'unité d'échangeur de chaleur est fixée au moyen de l'étrier de retenue (11).
